# EUROPÄISCHE PATENTSCHRIFT

(11) **EP 0 513 254 B1**
(45) Veröffentlichungstag und Bekanntmachung des Hinweises auf die Patenterteilung: **29.01.1997**
(21) Anmeldenummer: 91917793.1
(22) Anmeldetag: 10.10.1991
(51) Int. Cl.: B60N 2/22

(54) **GELENKBESCHLAG FÜR KRAFTFAHRZEUGSITZE**
HINGE MOUNTING FOR VEHICLE SEATS
GARNITURE D'ARTICULATION POUR SIEGES DE VEHICULES AUTOMOBILES

(30) Priorität: 22.11.1990 DE 4037057
(43) Veröffentlichungstag der Anmeldung: 19.11.1992
(73) Patentinhaber: Alfred Teves GmbH & Co. OHG, 51702 Bergneustadt (DE)
(72) Erfinder: REUBER, Gerhard, D-5962 Drolshagen (DE); MENNE, Hans, G., D-5275 Bergneustadt 2 (DE); SHAFRY, Gavriel, D-5882 Meinerzhagen (DE)
(74) Vertreter: Portwich, Peter
(86) Internationale Anmeldenummer: EP9101923
(87) Internationale Veröffentlichungsnummer: WO9209450

(56) Entgegenhaltungen:
- DE-A- 3 241 088
- DE-A- 3 529 887
- DE-A- 3 529 887
- DE-A- 3 701 639
- DE-A- 3 916 673
- FR-A- 2 050 733
- FR-A- 2 201 622
- GB-A- 2 069 966
- GB-A- 2 089 932
- US-A- 4 025 109
- US-A- 4 504 091

## Beschreibung

Die vorliegende Erfindung geht aus von einem Gelenkbeschlag für Kraftfahrzeugsitze gemäß dem Oberbegriff des Anspruchs 1. Derartiger Gelenkbeschläge sind beispielsweise aus der DE-A 32 41 088 und der DE-A 35 29 887 bekannt. In der erstgenannten Schrift sind Gelenkbeschläge dargestellt, bei welchen das dem zweiten Gelenkteil zugeordnete Zahnrad durch zwei Einzelzahnräder gebildet ist, welche in Druchbrüche des zweiten Gelenkteils von jeweils einer Seite her eingepreßt sind. Diese Anordnung gewährleistet auch bei motorischer Sitzlehenverstellung eine ausreichende Steifigkeit gegenüber Querkräften. Allerdings ist der Zusammenbau einer derartigen dreiteiligen Anordnung etwas aufwendig, da zunächst das zweite Gelenkteil mit entsprechenden Durchbrüchen versehen werden muß, die beiden separaten Zahnräder von jeweils einer Seite her deckungsgleich angeordnet sein müssen und schließlich genau im Bereich der Durchbrüche des zweiten Gelenkteils eine Verquetschung vorgenommen werden muß. Der Gelenkbeschlag nach der DE-A 35 29 887 ist so ausgebildet, daß zwei Umlaufengetriebe in Sandwichbauweise auf einer Achse angeordnet sind, deren Exzenter nur um kleine Winkel gegeneinander verdreht sind. Die beiden Umlaufgetriebe sind zueinander spiegelsymmetrisch angeordnet, wobei die beiden eine Innenverzahnung aufweisenden Umlaufräder zwischen zwei jeweils eine Außenverzahnung aufweisenden Umlaufräder angeordnet sind. Die einander gleichen Zahnradpaare sind jeweils an einem der beiden Gelenkteile befestigt.

Die Aufgabe der vorliegenden Erfindung ist es, bei einem Gelenkbeschlag der eingangs genannten Art eine preiswerte Herstellung zu gewährleisten.

Diese Aufgabe wird gelöst in Verbindung mit den kennzeichnenden Merkmalen des Anspruchs 1. Das Prinzip der Erfindung beruht also darauf, daß das die Außenverzahnung tragende Zahnrad in eine seiner Kontur entsprechende Ausnehmung des zweiten Gelenkteils eingefügt ist, so daß zumindest an diesem Zahnrad keine weiteren Maßnahmen zur Erzielung eines Formschlusses getroffen werden müssen. Bei Verwendung von zwei Zahnrädern die beidseitig in das Gelenkteil eingefügt werden, kann auf diese Weise auch sichergestellt werden, daß ohne Justage automatisch eine Deckungsgleichheit der beiden Außenverzahnungen hergestellt ist.

Für die folgende Beschreibung wird auf die DE-A 39 16 673 verwiesen, deren Inhalt hier zugrundegelegt wird. Eine weitere Vereinfachung und kostengünstigere Herstellung wird erzielt, wenn beispielsweise gemäß Anspruch 2 durch einen Preßvorgang eine vertiefte Ausnehmung (Ausstellung) in dem zweiten Gelenkteil geschaffen wird, wobei die Außenkontur dieser Ausstellung der Außenkontur des Zahnrades entspricht. Sorgt man dafür, daß das Zahnrad mit einem Teil seiner Außenverzahnung über die Ausnehmung hervorragt, so hat man einerseits eine einfache und feste Verbindung zwischen Zahnrad und zweitem Gelenkteil, andererseits dient die hervorstehende Außenverzahnung zum Eingreifen in die Innenverzahnung des zweiten Gelenkteils.

Eine Verbesserung durch eine Verminderung der Flankenbelastung läßt sich hierbei durch Anwendung der Merkmalskombination nach Anspruch 3 erreichen. Es wird hierbei also die Außenverzahnung zum einen Teil durch die hervorstehenden Zähne des Zahnrades und zum anderen durch eine entsprechende Außenverzahnung der Ausstellung in dem zweiten Gelenkteil erreicht. Sinnvollerweise wird man bei einer derartigen Konstruktion sowohl den in der DE-A 39 16 673 beschriebenen ersten Abschnitt als auch den zweiten Abschnitt mit einer Innenverzahnung versehen. Durch diese Maßnahme ist der in der DE-A 39 16 673 beschriebene Vorteil anwendbar, daß die beiden Abschnitte des ersten Gelenkteils in winkelmäßiger Verdrehung bei eingesetzter Außenverzahnung gegeneinander verschoben werden, so daß hier ein Toleranzausgleich mit einfachen Mitteln erzielt werden kann.

Man kann man gemäß einer Merkmalskombination nach Anspruch 4 auch zwei Zahnräder in Symmetrie zueinander anwenden und in zwei einander entsprechende Ausnehmungen einsetzen. Hierdurch kommt man zu einer Außenverzahnung, die aus zwei aus den Ausnehmungen hervorstehenden Verzahnungen zweier Zahnräder besteht und im Effekt die gleiche Wirkung wie ein breites Stirnrad gemäß der DE-A P 39 16 673 hat, welches in das zweite Gelenkteil (2) eingesetzt ist. Allerdings hat man hier wieder den Vorteil, daß diese zwei schmaleren Zahnräder durch Stanzen sehr preiswert hergestellt werden können.

In Weiterbildung läßt sich hier die Merkmalskombination nach Anspruch 5 einsetzen in dem die beiden Ausnehmungen zu einer Durchgangsöffnung verbunden sind, in die von der einen Seite her ein einziges oder aber auch von beiden Seiten her zwei zueinander symmetrisch angeordnete Zahnräder eingesetzt sein können. Aber auch eine zur Fläche des zweiten Gelenkteils unsymmetrische Anordnung der beiden Zahnräder läßt sich im Bedarfsfalle vorsehen.

Als Verstellmittel empfehlen sich in Weiterbildung der Erfindung die sich aus Anspruch 6 ergebenden Elemente. Hierdurch erhält der Exzenter eine hinreichende Möglichkeit für eine radiale Verschiebung. Die Keilwirkung weist damit in die Richtung der größten Exzentrizität des Exzenters, wodurch man die Keilwirkung optimiert.

Besonders einfache Justierungsmittel sind in dem Anspruch 7 angegeben, wobei in vorteilhafter Weise bei einer Welle gemäß Anspruch 6 ein Drehen des Exzenters auf der Antriebswelle verhindert wird.

Beim Einsetzen des Zahnrades oder der Zahnräder in die Ausnehmung bzw. die Durchgangsöffnung empfiehlt sich in Weiterbildung der Erfindung die Anwendung der Merkmalskombination nach Anspruch 8.

Da der Stanzeinzug im Material stärker verdichtete und mehr abgerundete Flanken bei der Außenverzahnung besitzt, bewirkt die den Stanzeinzug tragende Außenverzahnung einen ruhigeren Lauf des Zahnrades. Vorzugsweise wird man auch den Stanzeinzug der Ausnehmung bzw. der Ausstellung in den zweiten Gelenkteil ebenfalls nach außen legen, so daß die so gebildete Außenverzahnung ruhiger auf der ihr zugeordneten Innenverzahnung läuft.

Ein Ausführungsbeispiel der Erfindung wird nachfolgend anhand der Figuren erläutert darin zeigt
- Fig. 1: in geschnittener Darstellung ein erstes Ausführungsbespiel eines Gelenkbeschlages
- Fig. 2: eine Seitenansicht des Gelenkbeschlages nach Figur 1
- Fig. 3: ein zweites Ausführungsbeispiel mit selbsttätiger Justierung
- Fig. 4: ein drittes Ausführungsbeispiel mit selbsttätiger Justierung
- Fig. 5: in symbolischer Darstellung die Justierung durch eine federnde Längsverschiebung der Welle gemäß Figur 3 und
- Fig. 6: ein Profilteil, aus welchem die mit einem Keil versehene Welle abgeschnitten werden kann.

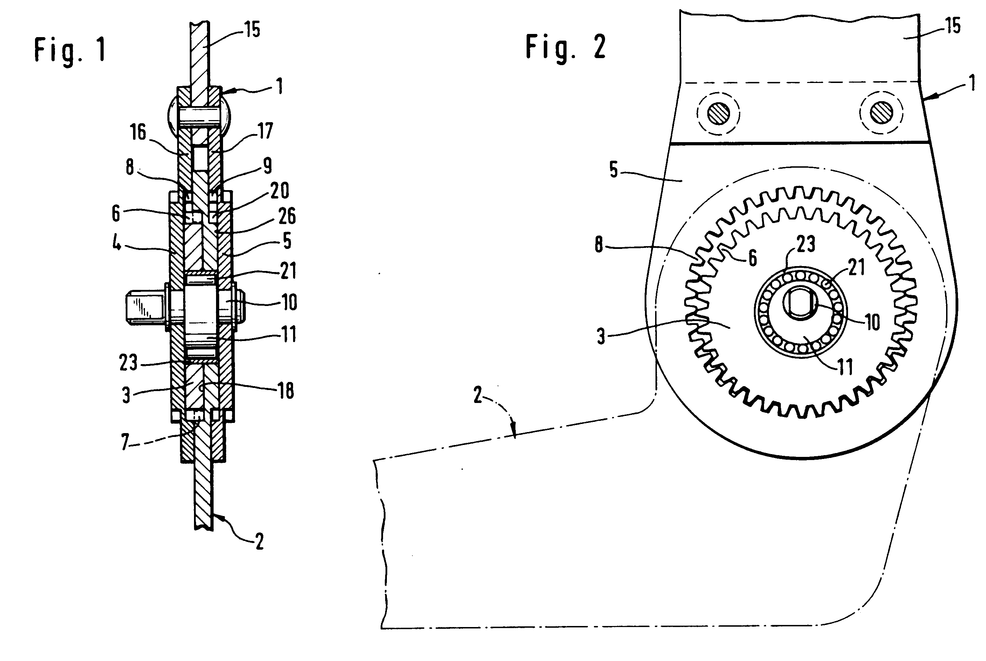

Hinsichtlich der Beschreibung wird auf die Patentanmeldung P 39 16 673 verwiesen. Die dort vorgenommene Numerierung wurde weitgehend beibehalten. Figur 1 und 2 zeigen einen ersten Gelenkteil, mit einem vorzugsweise mit der Lehne eines Autositzes ver-bundene Halteteil 15. Zu diesem Gelenkbeschlag 1 gehört ein Halteteil 15 welches mit einem ersten Beschlagdeckel 16 und einem zweiten Beschlagdeckel 17 vernietet oder anderweitig, z.B. punktgeschweißt verbunden ist. An dem ersten und zweiten Beschlagdeckel 16,17 sitzt ein erster Abschnitt 4 bzw. zweiter Abschnitt 5, die durch Einsenkungen in den Beschlagdeckeln 16,17 gebildet sind. Diese Einsenkungen haben an ihrer inneren Randfläche eine zahnförmige Kontur, so daß sich die beiden Innenverzahnungselemente 8,9 ergeben, die als Innenverzahnung des Beschlaggehäuses dienen.

Da die Einsenkungen durch entsprechendes Pressen gebildet sind, setzt sich auf dem äußeren Rand der Einsenkungen die Verzahnung als Außenverzahnung fort, die aber im vorliegenden Ausführungsbeispiel keine besondere Rolle spielt.

Das zweite Gelenkteil 2 ragt in das Beschlaggehäuse und hat innerhalb des Innenraums des Gehäuses eine Ausnehmung 18 mit einer Innenverzahnung, in die ein Zahnrad 3 mit einer entsprechenden Außenverzahnung eingesetzt ist. Da die Breite des Zahnrades 3 größer ist als die Tiefe der Ausnehmung 18, ragt ein Teil des Zahnrades über die Stirnfläche des zweiten Gehäuseteiles hervor und steht so als Außenverzahnung auf der in der in Figur 1 linken Seite des zweiten Gelenkteils 2 zur Verfügung.

Da die Ausnehmung 18 durch Pressen entstanden ist, wurde die Preßform so gewählt, daß die Durchstellung 26 eine Außenverzahnung 20 bildet, die mit der Außenverzahnung 6 des Zahnrades 3 fluchtet, so daß auch auf der rechten Seite des ersten Gelenkteils eine Außenverzahnung besteht. Die beiden Außenverzahnungen 6 und 20 wirken also wie das in der eingangs genannten Patentanmeldung beschriebene Stirnrad in Verbindung mit dem zweiten Gelenkteil 2.

Das außenverzahnte zweite Gelenkteil 2 ist über ein Rollenlager 21, welches in einer Hülse 23 gefaßt ist, drehbar auf einem Exzenter 11 gelagert, der wiederum in entsprechenden Durchbrüchen des ersten und zweiten Abschnitts 4,5 mittels einer Welle 10 gelagert ist. Der Exzenter 11 ist mit der Welle 10 drehfest verbunden und kann ggf. einstückig hergestellt sein.

Die Funktionsweise entspricht der im Zusammenhang mit dem Ausführungsbeispiel in der Patentanmeldung P 39 16 673 beschriebenen, indem über die Außenfläche des Exzenters die Außenverzahnung 6,20 in die Innenverzahnung 8,9 gepresst wird. Aufgrund der unterschiedlichen Zähnezahlen zwischen Außenverzahnung und Innenverzahnung ändert sich in Abhängigkeit von den Umdrehungen der Welle 10 der Winkel zwischen dem ersten und dem zweiten Gelenkteil 1,2 (s. Fig. 2), indem diese Teile in der Ebene von Figur 2 eine Schwenkbewegung gegeneinander ausführen. Eine Längsbewegung der Beschlagdeckel 16, 17 ist durch nicht näher beschriebene Sprengringe auf der Welle 10 verbindert. Selbstverständlich ist es für die Wirkungsweise des Gelenkbeschlages wichtig, daß der Durchmesser der Innerverzahnung größer ist als der Durchmesser der Außenverzahnung, wie aus Figur 1 und 2 deutlich zu ersehen, so daß die Außenzähne nur örtlich in die Innenverzahnung eingreifen (in Fig. 1 und 2 am unteren Ende der Außenverzahnung).

In dem man die Beschlagdeckel 16 und 17 während der Montage und zwar vor der Verbindung gegeneinander verdreht bzw. verspannt, eliminiert man in besonders einfacher Weise das Beschlagspiel bzw. reduziert es erheblich.

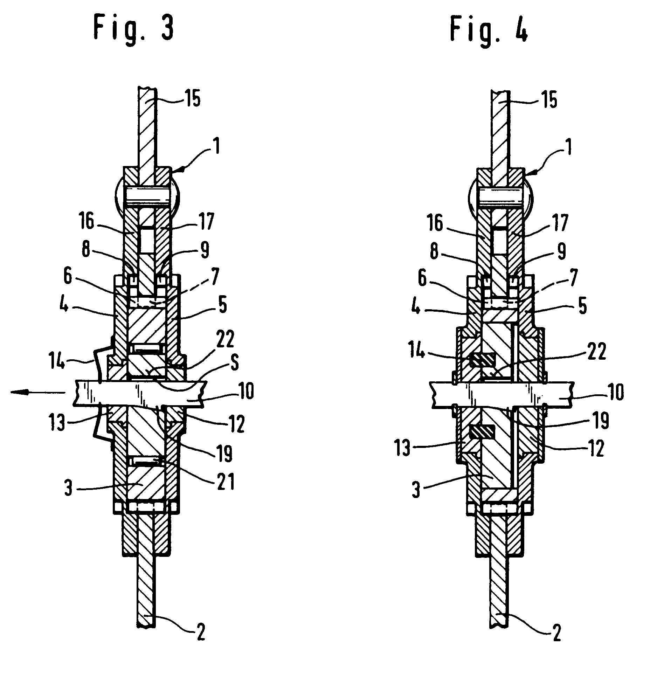

Figur 3 zeigt nun die Möglichkeit einer Selbstjustierung der Innenverzahnung gegenüber der Außenverzahnung, wobei hier ein breites Stirnrad gemäß Patentanmeldung P 39 16 673 aber auch eine aus mehreren Elementen gebildete Außenverzahnung angewendet werden kann. Das Ausführungsbeispiel Figur 3 geht aus von einer Konstruktion wie sie im Zusammenhang mit Figur 1 und 2 der o.g. Anmeldung geschildert ist. Der wesentliche Unterschied besteht nun darin, daß die Herstellung des Exzenters und die Justierung vereinfacht werden soll. Hierzu ist die vierkantige Antriebswelle 10 längstverschieblich und drehfest gegenüber dem Exzenter 11 gelagert. Die Antriebswelle 10 besitzt einen keilförmingen Ansatz 19, der mit seiner äußeren Schrägfläche einer entsprechend geneigten schrägen Fläche eines im wesentlichen vierkantigen Durchgangsloches 22 des Exzenters 11 zugeordnet ist. Auf der dem Keil 19 abgewandten Fläche der Antriebswelle 10 ist zwischen der Innenfläche des Durchgangsloches 22 und der Außenfläche der Welle 10 ein Spalt S. Zieht man also die Welle 10 in Richtung des Pfeiles in Figur 3, so wird sich der Exzenter 11 nach unten und damit in Krafteingriff mit dem Zahnrad 3 bewegen (in Richtung größer werdender Exzentrizität), dessen Außenverzahnung dementsprechend in die Innenverzahnung des zweiten Gelenkteils 2 eingreift.

Die beiden Büchsen 12,13 zur Lagerung der Welle 10 ermöglichen die mit dem Keil 19 versehene Welle 10 in das durch die Deckel 16,17 gebildete Gehäuse einzuführen und zwar zwischen den Abschnitten 4 und 5 der Beschlagdeckel 16 und 17. Gleichzeitig bilden sie ein Drehlager für die Vierkantwelle 10 gegenüber dem Gehäuse 16,17.

Die symbolisch dargestellte Feder 14 greift über eine Nut in Längsrichtung an der Welle 10 an und stellt so den Exzenter 11 in radialer Richtung nach.

Eine andere Möglichkeit zur Nachstellung ist aus dem Ausführungsbeispiel gemäß Figur 4 zu ersehen, bei dem mittels eines ringförmigen Federelements 14 der Exzenter 11 in Längsrichtung der Welle 10 vorgespannt ist, wobei die Wirkung des Federelements 14 versucht, den Exzenter nach rechts zu verschieben, so daß er vermehrt das Zahnrad 3 nach unten drückt und es so mit seiner Außenverzahnung in Eingriff mit der Innenverzahnung des zweiten Gelenkteils hält. Die Buchsen 12 und 13 dienen wieder dazu, die Welle 10 drehbar zu lagern, wobei diese Buchsen über Sprengringe und Dichtplatten in Längsrichtung der Welle 10 festgehalten sind. In Fig. 4 wird somit statt der Welle der Exzenter verschoben.

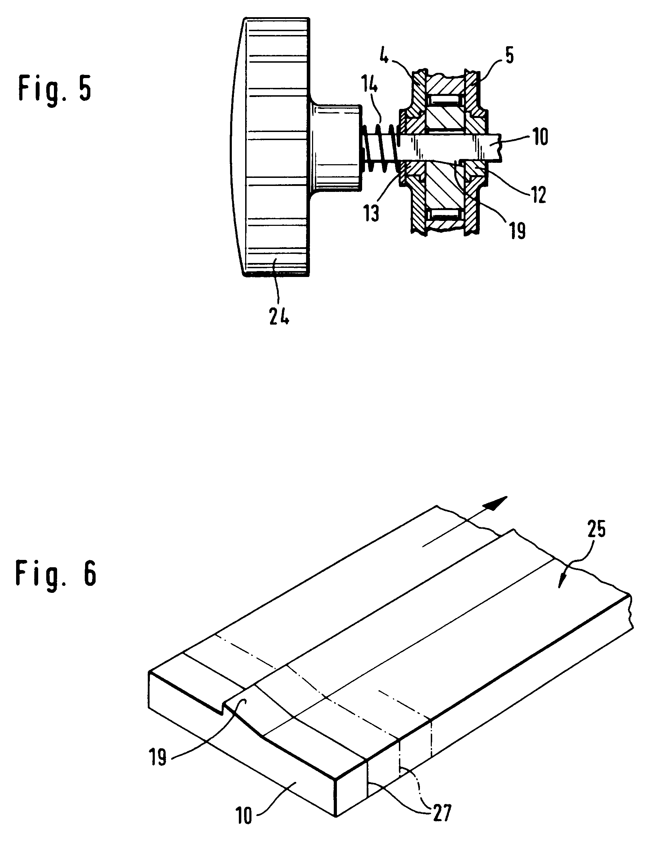

Figur 5 zeigt eine manuelle Betätigungsmöglichkeit des erfindungsgemäßein Gelenkbeschlags, in dem das Federelement 14 einen Drehknopf 24 in Längsrichtung der Welle 10 vorspannt und somit die weiter oben beschriebene Wirkung des Keils 19 aufrecht erhält. Durch jeweils einen entsprechenden Bund an den Buchsen 12,13 kann man erzwingen, daß diese in axialer Richtung gegenüber den Abschnitten 4,5 festgehalten werden.

Figur 6 zeigt eine Möglichkeit eine mit einem Keil 19 versehene Welle 10 aus einem Profil 25, (z.B. durch Rollen oder Ziehen gebildet) preiswert durch Abschneiden zu gewinnen. Dabei wird das Pressteil durch Pressen in Richtung des Pfeiles in Figur 6 gewonnen, während die nachfolgende Abschneidebewegung senkrecht hierzu jeweils in einer zu Ebene 27 parallelen Ebene erfolgt.

## Patentansprüche

1. Gelenkbeschlag für Kraftfahrzeugsitze, mit zwei gegeneinander verschwenkbaren Gelenkteilen (1,2), wobei dem ersten Gelenkteil (1) eine Innenverzahnung (8,9) und dem zweiten Gelenkteil (2) eine aus mindestens zwei Elementen zusammengesetzte fluchtende Außenverzahnung (6,20) zugeordnet ist, die ein Zahnrad bildet, wobei Außenverzahnung und Innenverzahnung miteinander kämmen, und die Außenverzahnung (6,20) eine geringere Zähnezahl und einen geringeren Kopfkreisdurchmesser aufweist als die Innenverzahnung, und mit einer einen Exzenter (11) aufweisenden Antriebswelle (10), auf der die beiden Gelenkteile (1,2) gelagert sind, dadurch **gekennzeichnet**, daß das Zahnrad (3) in eine der Außenkontur des Zahnrades (3) entsprechende Ausnehmung (18) in dem zweiten Gelenkteil (2) eingesetzt ist, wobei das Zahnrad (3) mit einem Teil seiner Breite aus der Ausnehmung (18) ragt und einen Teil der Außenverzahnung (6) bildet.

2. Gelenkbeschlag nach Anspruch 1, dadurch **gekennzeichnet**, daß die Ausnehmung (18) durch eine Ausstellung (26) im zweiten Gelenkteil (2) gebildet ist.

3. Gelenkbeschlag nach Anspruch 2, dadurch **gekennzeichnet**, daß die Ausstellung (26) eine der Verzahnung des Zahnrades (3) entsprechende Außenverzahnung (20) aufweist, die in Verbindung mit der Verzahnung (6) des Zahnrades die Außenverzahnung bildet.

4. Gelenkbeschlag nach Anspruch 1, dadurch **gekennzeichnet**, daß zwei Zahnräder miteinander fluchtend in mindestens einer Ausnehmung des zweiten Gelenkteils (2) eingesetzt sind.

5. Gelenkbeschlag nach Anspruch 4, dadurch **gekennzeichnet**, daß die Ausnehmung eine Durchgangsöffnung in dem zweiten Gelenkteil (2) ist.

6. Gelenkbeschlag nach einem der vorhergehenden Ansprüche, dadurch **gekennzeichnet**, daß die Antriebswelle gegenüber dem Exzenter längsverschiebbar und nicht drehbar gelagert ist und mit einem Keil versehen ist, der bei Längsverschiebung der Antriebswelle mit einer geneigten Innenfläche des Exzenters (11) derart zusammenwirkt, daß der Exzenter (11) radial verstellt wird.

7. Gelenkbeschlag nach einem der Ansprüche 1 bis 6, dadurch **gekennzeichnet**, daß die Antriebswelle (10) eine rechteckförmige Querschnittsfläche besitzt, daß der Keil einstückig mit der Welle verbunden ist und die Keil-Wellen-Einheit von einem Profilstück (25) abgeschnitten ist, welches eine der Kontur aus Welle (10) und Keil (19) entsprechende Querschnittsfläche besitzt.

8. Gelenkbeschlag nach einem Ansprüche 1 bis 7, dadurch **gekennzeichnet**, daß mindestens das oder die Zahnräder (3) oder das zweite Gelenkteil (2) auf dem Exzenter (11) gleitgelagert ist.

9. Gelenkbeschlag nach einem der vorhergehenden Ansprüche, wobei zwei Teile (4,5) mit einer Innenverzahnung (8,9) versehen sind, dadurch **gekennzeichnet**, daß die beiden Teile mit Innenverzahnung (4,5) gegeneinander verdreht und somit verspannt sind.

10. Gelenkbeschlag nach Anspruch 9, dadurch **gekennzeichnet**, daß bei der Montage die beiden Teile (4,5) mit Innenverzahnung (8,9) gegeneinander mit einem vorbestimmten Moment verdreht dann axial leicht verspannt werden, um die beiden Teile (4,5) nach Drehen der Antriebswelle um mindestens 360° miteinander zu verbinden.

## Claims

1. An articulated joint fitting for automotive vehicle seats, including two joint parts (1, 2) being rotatable relative to each other, the first joint part (1) being associated with an internal toothing (8, 9) and the second joint part (2) being associated with an aligning external toothing (6, 20) composed of at least two elements, and forming a toothed wheel, with the internal toothing and the external toothing meshing with each other, wherein the external toothing (6, 20) includes a smaller number of teeth and has a smaller crown circle diameter than the internal toothing, a driving shaft (10) furnished with an eccentric (11), and the two joint parts (1, 2) being mounted on the driving shaft,
**characterized** in that the gear wheel (3) is inserted in a recess (18) in the second joint part (2), the recess corresponding to the outside contour of the gear wheel (3), the gear wheel (3) projecting with part of its width out of the recess (18) and forming part of the external toothing (6).

2. An articulated joint fitting as claimed in claim 1,
**characterized** in that the recess (18) is formed by an outward offset (26) in the second joint part (2).

3. An articulated joint fitting as claimed in claim 2,
**characterized** in that the outward offset (26) has an external toothing (20) corresponding to the toothing of the gear wheel (3) and, jointly with the toothing (6) of the gear wheel, constituting the external toothing.

4. An articulated joint fitting as claimed in claim 1,
**characterized** in that two gear wheels are inserted in at least one recess of the second joint part (2) so as to be in alignment with each other.

5. An articulated joint fitting as claimed in claim 4,
**characterized** in that the recess is a through-opening in the second joint part (2).

6. An articulated joint fitting as claimed in any one of the preceding claims,
**characterized** in that the driving shaft is mounted so as to be longitudinally slidable and unrotatable relative to the eccentric and includes a wedge which interacts, on a longitudinal displacement of the driving shaft, with an inclined internal surface of the eccentric (11) such as to readjust the eccentric (11) in a radial direction.

7. An articulated joint fitting as claimed in any one of claims 1 to 6,
**characterized** in that the driving shaft (10) has a rectangular cross-sectional surface, in that the wedge is connected with the shaft so as to form one piece with it and the wedge-shaft assembly is cut from a steel section (25) which has a cross-sectional surface matching the contour made up of shaft (10) and wedge (19).

8. An articulated joint fitting as claimed in any one of claims 1 to 7,
**characterized** in that at least the gear wheel(s) (3) or the second joint part (2) is supported on the eccentric (11) by a sliding bearing.

9. An articulated joint fitting as claimed in any one of the preceding claims, wherein two parts (4, 5) include an internal toothing (8, 9),
**characterized** in that the two parts which have an internal toothing (4, 5) are rotated and, thus, braced in relation to each other.

10. An articulated joint fitting as claimed in claim 9,
**characterized** in that, in the assembly, the two parts (4, 5) having an internal toothing (8, 9) are rotated in relation to each other with a predetermined torque, to be slightly braced in an axial direction in order to interconnect the two parts (4, 5) after rotation of the driving shaft by at least 360 degrees.

## Revendications

1. Ferrure d'articulation pour sièges de véhicules automobiles, comprenant deux éléments d'articulation (1, 2) pouvant osciller l'un par rapport à l'autre, une denture intérieure (8, 9) étant associée au premier élément d'articulation (1), et une denture extérieure alignée (6, 20), formée par au moins deux éléments assemblés, étant associée au second élément d'articulation (2), cette denture extérieure formant une roue dentée, la denture extérieure et la denture intérieure étant en prise l'une dans l'autre, et la denture extérieure (6, 20) présentant un nombre de dents inférieur, et un diamètre de tête inférieur à ceux de la denture intérieure, et comprenant un arbre d'entraînement (10) comportant un excentrique (11), sur lequel sont logés les deux éléments d'articulation (1, 2),
caractérisée en ce que la roue dentée (3) est insérée dans un évidement (18) ménagé dans le second élément d'articulation (2), correspondant au contour extérieur de la roue dentée (3), la roue dentée (3) faisant saillie, sur une partie de sa largeur, par rapport à l'évidement (18) et formant une partie de la denture extérieure (6).

2. Ferrure d'articulation selon la revendication 1, caractérisée en ce que l'évidement (18) est formé par une partie refoulée (26) du second élément d'articulation (2).

3. Ferrure d'articulation selon la revendication 2, caractérisée en ce que, la partie refoulée (26) présente une denture extérieure (20) correspondant à la denture de la roue dentée (3), qui forme, en conjonction avec la denture (6) de la roue dentée, ladite denture extérieure.

4. Ferrure d'articulation selon la revendication 1, caractérisée en ce que deux roues dentées alignées l'une sur l'autre sont insérées dans au moins un évidement ménagé dans le second élément d'articulation (2).

5. Ferrure d'articulation selon la revendication 4, caractérisée en ce que l'évidement est une ouverture traversante ménagée dans le second élément d'articulation (2).

6. Ferrure d'articulation selon l'une des revendications précédentes, caractérisée en ce que l'arbre d'entraînement peut coulisser longitudinalement par rapport à l'excentrique, sans pouvoir tourner par rapport à celui-ci, et est pourvu d'un coin qui, lors du déplacement longitudinal de l'arbre d'entraînement, coopère avec une face inclinée intérieure de l'excentrique (11) de manière telle que l'excentrique (11) soit déplacé dans le sens radial.

7. Ferrure d'articulation selon l'une des revendications 1 à 6, caractérisée en ce que l'arbre d'entraînement (10) présente une section transversale de forme rectangulaire, en ce que le coin fait corps avec l'arbre, et en ce que l'unité arbre-coin est découpée dans une pièce profilée (25), dont la section transversale correspond aux contours définis par l'arbre (10) et le coin (19).

8. Ferrure d'articulation selon l'une des revendications 1 à 7, caractérisée en ce qu'au moins la ou les roue(s) dentée(s) (3) ou le second élément d'articulation (2) est (sont) monté(es) sur paliers lisses sur l'excentrique (11).

9. Ferrure d'articulation selon l'une des revendications précédentes, deux parties (4, 5) étant pourvues d'une denture intérieure (8, 9), caractérisée en ce que les deux parties (4, 5) munies d'une denture intérieure sont décalées en rotation l'une par rapport à l'autre et sont, de ce fait, montées sous précontrainte.

10. Ferrure d'articulation selon la revendication 9, caractérisée en ce que, lors du montage, les deux parties (4, 5) munies de dentures intérieures (8, 9) sont décalées en rotation l'une par rapport à l'autre, à un couple prédéterminé, et sont ensuite légèrement serrées dans le sens axial, afin de relier les deux parties (4, 5) l'une à l'autre après avoir imprimé à l'arbre d'entraînement une rotation d'au moins 360°.
